(19) Europäisches Patentamt
European Patent Office
Office européen des brevets

(11) EP 4 549 055 A1

(12) **EUROPEAN PATENT APPLICATION**
published in accordance with Art. 153(4) EPC

(43) Date of publication:
**07.05.2025 Bulletin 2025/19**

(21) Application number: **23831396.9**

(22) Date of filing: **26.06.2023**

(51) International Patent Classification (IPC):
***B22F 1/052*** *(2022.01)* ***B22F 1/00*** *(2022.01)*
***B22F 1/054*** *(2022.01)* ***B22F 1/065*** *(2022.01)*
***B22F 1/068*** *(2022.01)* ***B22F 1/102*** *(2022.01)*
***B22F 1/17*** *(2022.01)* ***B22F 7/08*** *(2006.01)*
***B22F 9/00*** *(2006.01)*

(52) Cooperative Patent Classification (CPC):
**B22F 1/00; B22F 1/052; B22F 1/054; B22F 1/065; B22F 1/068; B22F 1/102; B22F 1/17; B22F 7/08; B22F 9/00**

(86) International application number:
**PCT/JP2023/023646**

(87) International publication number:
**WO 2024/004956 (04.01.2024 Gazette 2024/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.07.2022 JP 2022107150**

(71) Applicant: **Daicel Corporation**
**Osaka-shi, Osaka 530-0011 (JP)**

(72) Inventors:
- **SHIMOYAMA, Akio**
  **Tokyo 108-8230 (JP)**
- **HISHIDA, Masahiro**
  **Tokyo 108-8230 (JP)**

(74) Representative: **Grünecker Patent- und Rechtsanwälte**
**PartG mbB**
**Leopoldstraße 4**
**80802 München (DE)**

(54) **INK COMPOSITION**

(57) To provide an ink composition that can form a sintered body (conductive wire, joint structure, or the like) capable of suppressing a decrease in joint strength due to thermal shock. An ink composition containing metal particles and a solvent, wherein the metal particles contain metal nanoparticles having a particle size of from 1 to 100 nm, metal sub-microparticles having a particle size of from 101 to 1000 nm, and metal microparticles having a particle size of from 1001 to 10000 nm; a mass ratio of the metal microparticles to the metal sub-microparticles (micro/sub-micro) is less than 1.00; and a content of the metal nanoparticles in the metal particles is 8 mass% or more.

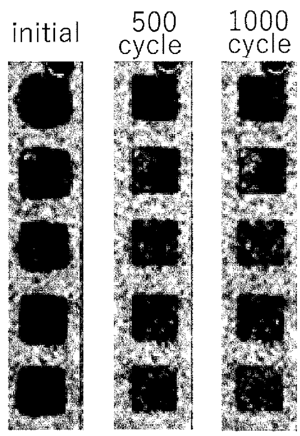


FIG. 1

EP 4 549 055 A1

## Description

### Technical Field

The present disclosure relates to an ink composition for forming sintered bodies, such as a conductive wire and a joint structure, to connect electronic elements. The present application claims priority to JP 2022-107150, filed in Japan on July 1, 2022, the content of which is incorporated herein by reference.

### Background Art

In installing, on a substrate, an electronic element such as a power semiconductor element or an LED element, joining a plurality of materials with high strength is required. For this purpose, a conductive wire, a joint structure, or a wiring board including the conductive wire and the joint structure is used.
For example, a method for forming the conductive wire is known, in which a conductive paste containing conductive particles and an organic solvent is applied onto an insulating substrate by a printing method, and then sintered, thereby producing a conductive wire.
For example, Patent Document 1 discloses a joining material composed of a metal paste containing metal particles, a solvent, and a dispersant, and describes that the use of the joining material makes it possible to prevent generation of a void in a metal joining layer or at the interface between the metal joining layer and an Si chip or a copper substrate and to achieve good connection, even without performing preliminary firing.

### Citation List

### Patent Document

Patent Document 1: JP 2018-059192 A

### Summary of Invention

### Technical Problem

However, the conductive paste disclosed in Patent Document 1 has a problem in that the joint strength of a sintered body (conductive wire, joint structure, or the like) is likely to decrease in thermal shock at, for example, from -50 to 200°C.
Thus, an object of the present disclosure is to provide an ink composition that can form a sintered body (conductive wire, joint structure, or the like) capable of suppressing a decrease in joint strength due to thermal shock.

### Solution to Problem

As a result of intensive studies for solving the problem, the inventors of the present disclosure have found that an ink composition containing three types of metal particles having particle sizes within specific ranges can suppress a decrease in joint strength due to thermal shock. The present disclosure relates to those completed based on these findings.
Accordingly, the present disclosure provides an ink composition containing metal particles and a solvent, wherein the metal particles contain metal nanoparticles having a particle size of from 1 to 100 nm, metal sub-microparticles having a particle size of from 101 to 1000 nm, and metal microparticles having a particle size of from 1001 to 10000 nm; a mass ratio of the metal microparticles to the metal sub-microparticles (micro/sub-micro) is less than 1.00; and a content of the metal nanoparticles in the metal particles is 8 mass% or more.
A content of the metal sub-microparticles in the metal particles is preferably more than 35 mass%.
A content of the metal microparticles in the metal particles is preferably from 5 to 35 mass%.
A mass ratio of the metal microparticles to the metal nanoparticles (micro/nano) is preferably 3.00 or less.
Preferably, surfaces of the metal nanoparticles, the metal sub-microparticles, and the metal microparticles are the same or different and are formed of at least one selected from silver, copper, and an alloy thereof.
Preferably, the metal microparticles contain flaky particles, and the metal nanoparticles and the metal sub-microparticles contain substantially spherical particles.
Preferably, the metal nanoparticles are silver nanoparticles each having a structure in which a surface is coated with a protective agent containing an amine.
Preferably, the amine contains an aliphatic hydrocarbon monoamine (1) having 6 or more carbons in total, and an

aliphatic hydrocarbon monoamine (2) having 5 or less carbons in total and/or an aliphatic hydrocarbon diamine (3) having 8 or less carbons in total.

Preferably, the solvent contains at least one selected from a glycol ether and a glycol ester.

Preferably, the solvent contains an organic solvent (a), an organic solvent (b), and an organic solvent (c) which are mutually different compounds and satisfy Relations (1) to (6) described below:

$$150°C \leq Ta \leq 250°C \ (1)$$

$$150°C \leq Tb \leq 250°C \ (2)$$

$$250°C \leq Tc \leq 350°C \ (3)$$

$$\delta a \geq 10.0 \ (4)$$

$$\delta c \leq 9.0 \ (5)$$

$$\delta c \leq \delta b \leq \delta a \ (6)$$

[wherein Ta to Tc represent boiling points of the organic solvents (a) to (c), respectively, and δa to δc represent Hansen solubility parameters of the organic solvents (a) to (c), respectively].

A content of the solvent is preferably from 0.5 to 20 mass%.

The ink composition is preferably for joining.

The present disclosure also provides a sintered body of the ink composition.

The present disclosure also provides an electronic device including the sintered body.

The present disclosure also provides an ink composition containing metal particles and a solvent, wherein a particle size distribution of the metal particles has at least one peak for each of a particle size range of from 1 to 100 nm, a particle size range of from 101 to 1000 nm, and a particle size range of from 1001 to 10000 nm.

## Advantageous Effects of Invention

The use of the ink composition of the present disclosure makes it possible to form a sintered body (conductive wire, joint structure, or the like) capable of maintaining high joint strength against thermal shock, and also to produce an electronic device including such a sintered body.

## Brief Description of Drawings

FIG. 1 illustrates an SAT image of a sintered body surface after joint strength measurement in a sample produced in Example 1.

FIG. 2 illustrates an SAT image of a sintered body surface after joint strength measurement in a sample produced in Example 2.

FIG. 3 illustrates an SAT image of a sintered body surface after joint strength measurement in a sample produced in Comparative Example 1.

FIG. 4 illustrates an SAT image of a sintered body surface after joint strength measurement in a sample produced in Comparative Example 2.

FIG. 5 illustrates an SAT image of a sintered body surface after joint strength measurement in a sample produced in Comparative Example 3.

## Description of Embodiments

### [Ink Composition]

The ink composition according to an embodiment of the present disclosure is an ink composition that can form a

conductor capable of joining members together. The ink composition is used for forming, for example, a sintered body (for example, a conductive wire or a joint structure) to connect electronic elements.

An ink composition according to a first embodiment of the present disclosure contains metal particles and a solvent, wherein the metal particles contain metal nanoparticles having a particle size of from 1 to 100 nm, metal sub-microparticles having a particle size of from 101 to 1000 nm, and metal microparticles having a particle size of from 1001 to 10000 nm; the mass ratio of the metal microparticles to the metal sub-microparticles (micro/sub-micro) is less than 1.00; and the content of the metal nanoparticles in the metal particles is 8 mass% or more. Preferably, an ink composition according to a second embodiment described below satisfies the above.

The use of the metal microparticles and the metal sub-microparticles having a relatively smaller particle size than the metal microparticles in combination at the aforementioned mass ratio (micro/sub-micro) results in formation of strong necking between the metal particles. Further, the metal nanoparticles having a relatively smaller particle size are contained in the metal particles in an amount of 8 mass% or more, and thus the metal particles are more densely packed, resulting in formation of a sintered body having a structure with a stronger binding strength against thermal shock.

The ink composition according to the second embodiment of the present disclosure contains metal particles and a solvent, wherein the particle size distribution of the metal particles has at least one peak for each of a particle size distribution range of from 1 to 100 nm, a particle size range of from 101 to 1000 nm, and a particle size range of from 1001 to 10000 nm. Preferably, the ink composition according to the first embodiment satisfies the above. **In** the particle size distribution, metal particles having a particle size in a distribution range of from 1 to 100 nm may be referred to as "metal nanoparticles", metal particles having a particle size in a distribution range of from 101 to 1000 nm may be referred to as "metal sub-microparticles", and metal particles having a particle size in a distribution range of from 1001 to 1000 nm may be referred to as "metal microparticles".

Since the metal particles have a wide particle size range of from 1 to 10000 nm, the metal nanoparticles having a relatively smaller size and metal particles mainly containing the metal sub-microparticles having a relatively small size and the metal microparticles can be mixed and contained in adjusted particle size distribution and blending amount, thereby making it possible to attain a particle size distribution having at least one peak for each of the particle size distribution range of from 1 to 100 nm, the particle size range of from 101 to 1000 nm, and the particle size range of from 1001 to 10000 nm. The metal particles contain the metal microparticles, the metal sub-microparticles, and the metal nanoparticles exhibiting such a peak of the particle size distribution, and thus strong necking between the metal particles is formed, and the metal particles are densely filled, resulting in formation of a sintered body having a structure with a strong binding strength against thermal shock.

Next will be described preferred embodiments of both the ink composition according to the first embodiment and the ink composition according to the second embodiment.

(Metal Nanoparticles)

The metal nanoparticles preferably have a structure in which the surfaces of the metal nanoparticles are coated with an organic protective agent containing an amine, more specifically, a structure in which unshared electron pairs of the amine are electrically coordinated to the metal nanoparticle surfaces. Since the metal nanoparticles have the above structure, re-aggregation between the metal nanoparticles is prevented, and a highly dispersed state can be stably maintained in the ink composition. Only one type of the metal nanoparticles may be used, or two or more types thereof may be used.

The metal nanoparticles have a particle size of from 1 to 100 nm in the particle size distribution of the metal particles. The particle size of each metal nanoparticle is a size excluding the protective agent covering the particle surface (i.e., the size of the metal nanoparticle itself).

The metal nanoparticles preferably have at least one peak in the range of from 1 to 100 nm. The number of the aforementioned peaks is more preferably one.

The particle size of the metal nanoparticles before mixing can be calculated as a particle size distribution by analyzing an outer shape of the particles as a particle size (equivalent circle diameter) with respect to a binarized SEM observation image (magnification: 100000 ×, number of particles: 1000) using, for example, image analysis software (trade name: "MultiImageTool", available from System **In** Frontier Inc.).

The peak particle size of the metal nanoparticles in the particle size distribution can be obtained as a mode size indicating a maximum value of the relative particle amount.

Examples of the metal forming the metal nanoparticles include gold, silver, copper, nickel, aluminum, rhodium, cobalt, ruthenium, platinum, palladium, chromium, indium, and an alloy thereof. Among them, silver, copper, and an alloy thereof are preferred, and silver is more preferred, from the viewpoint that a decrease in joint strength is easily suppressed against thermal shock. Only one type of the metal for forming the metal nanoparticles may be used, or two or more types thereof may be used.

The metal nanoparticles preferably have a structure in which the surfaces of the particles are formed of the metal,

and may have a structure in which the particles themselves are formed of the metal, or may have a structure of metal-coated particles in which the surfaces of the particles are formed of the metal.

Examples of the shape of the metal nanoparticles include a substantially spherical shape, a flaky shape, and an irregular shape. Among them, a substantially spherical shape is preferred from the viewpoint that the metal particles are easily densely packed. Only one type of the shape of the metal nanoparticles may be used, or two or more types thereof may be used. The term "substantially spherical shape" refers to a shape having no acute angle portion on the surface, such as a perfectly spherical shape, an approximately spherical shape, or an ellipsoidal shape such as a prolate shape or an oblate shape.

The metal nanoparticles are preferably surface-modified metal nanoparticles having a structure in which the surfaces of the metal nanoparticles are coated with an organic protective agent containing an amine. Only one type of the amine may be used, or two or more types thereof may be used. The organic protective agent may contain a compound besides the amine.

The amine is a compound in which at least one hydrogen atom of ammonia is substituted with a hydrocarbon group, and includes a primary amine, a secondary amine, and a tertiary amine. The amine may be a monoamine or a polyamine such as a diamine.

The amine preferably contains at least one selected from a monoamine (1) having 6 or more carbons in total and represented by Formula (a-1) below, wherein $R^1$, $R^2$, and $R^3$ are the same or different and are a hydrogen atom or a monovalent hydrocarbon group (excluding the case where $R^1$, $R^2$, and $R^3$ are all hydrogen atoms); a monoamine (2) having 5 or less carbons in total and represented by Formula (a-1) below, wherein $R^1$, $R^2$, and $R^3$ are the same or different and are a hydrogen atom or a monovalent hydrocarbon group (excluding the case where $R^1$, $R^2$, and $R^3$ are all hydrogen atoms); and a diamine (3) having 8 or less carbons in total and represented by Formula (a-2) below, wherein $R^8$ is a divalent hydrocarbon group, and $R^4$ to $R^7$ are the same or different and are a hydrogen atom or a monovalent hydrocarbon group; and in particular, the amine preferably contains the monoamine (1) in combination with the monoamine (2) and/or the diamine (3).

[Chem. 1]

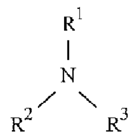

(a-1)

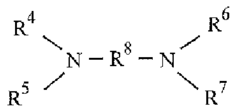

(a-2)

Examples of the hydrocarbon group include an aliphatic hydrocarbon group, an alicyclic hydrocarbon group, and an aromatic hydrocarbon group. Among them, an aliphatic hydrocarbon group and an alicyclic hydrocarbon group are preferred, and an aliphatic hydrocarbon group is particularly preferred. Therefore, the monoamine (1), the monoamine (2), and the diamine (3) are preferably an aliphatic monoamine (1), an aliphatic monoamine (2), and an aliphatic diamine (3).

Examples of the monovalent aliphatic hydrocarbon group include an alkyl group and an alkenyl group. Examples of the monovalent alicyclic hydrocarbon group include a cycloalkyl group and a cycloalkenyl group. Examples of the divalent aliphatic hydrocarbon group include an alkylene group and an alkenylene group. Examples of the divalent alicyclic hydrocarbon group include a cycloalkylene group and a cycloalkenylene group.

Examples of the monovalent hydrocarbon group in $R^1$, $R^2$, and $R^3$ include alkyl groups having approximately from 1 to 20 carbons, such as a methyl group, an ethyl group, a propyl group, an isopropyl group, a butyl group, an isobutyl group, an s-butyl group, a t-butyl group, a pentyl group, a hexyl group, a decyl group, a dodecyl group, a tetradecyl group, and an octadecyl group; alkenyl groups having approximately from 2 to 20 carbons, such as a vinyl group, an allyl group, a methallyl group, a 1-propenyl group, an isopropenyl group, a 1-butenyl group, a 2-butenyl group, a 3-butenyl group, a 1-pentenyl group, a 2-pentenyl group, a 3-pentenyl group, a 4-pentenyl group, and a 5-hexenyl group; cycloalkyl groups having approximately from 3 to 20 carbons, such as a cyclopropyl group, a cyclobutyl group, a cyclopentyl group, a cyclohexyl group, and a cyclooctyl group; and cycloalkenyl groups having approximately from 3 to 20 carbons, such as a cyclopentenyl group and a cyclohexenyl group.

Examples of the monovalent hydrocarbon group in $R^4$ to $R^7$ include those having 7 or less carbons among those exemplified as the monovalent hydrocarbon group in $R^1$, $R^2$, and $R^3$.

Examples of the divalent hydrocarbon group in $R^8$ include alkylene groups having from 1 to 8 carbons, such as a methylene group, a methylmethylene group, a dimethylmethylene group, an ethylene group, a propylene group, a

trimethylene group, a tetramethylene group, a pentamethylene group, and a heptamethylene group; and alkenylene groups having from 2 to 8 carbons, such as a vinylene group, a propenylene group, a 1-butenylene group, a 2-butenylene group, a butadienylene group, a pentenylene group, a hexenylene group, a heptenylene group, and an octenylene group.

The hydrocarbon groups in the above $R^1$ to $R^8$ may have any type of substituent [e.g., a halogen atom, an oxo group, a hydroxy group, a substituted oxy group (e.g., a $C_{1-4}$ alkoxy group, a $C_{6-10}$ aryloxy group, a $C_{7-16}$ aralkyloxy group, or a $C_{1-4}$ acyloxy group), a carboxy group, a substituted oxycarbonyl group (e.g., a $C_{1-4}$ alkoxycarbonyl group, a $C_{6-10}$ aryloxycarbonyl group, or a $C_{7-16}$ aralkyloxycarbonyl group), a cyano group, a nitro group, a sulfo group, or a heterocyclic group]. The hydroxy group or the carboxy group may be protected by a protective group commonly used in the field of organic synthesis.

The monoamine (1) is a compound having a function of imparting high dispersibility to the metal nanoparticles. Examples of the monoamine (1) include primary amines having a linear alkyl group, such as hexylamine, heptylamine, octylamine, nonylamine, decylamine, undecylamine, dodecylamine, tridecylamine, tetradecylamine, pentadecylamine, hexadecylamine, heptadecylamine, and octadecylamine; primary amines having a branched alkyl group, such as isohexylamine, 2-ethylhexylamine, and tert-octylamine; primary amines having a cycloalkyl group, such as cyclohexylamine; primary amines having an alkenyl group, such as oleylamine; secondary amines having a linear alkyl group, such as N,N-dipropylamine, N,N-dibutylamine, N,N-dipentylamine, N,N-dihexylamine, N,N-dipeptylamine, N,N-dioctylamine, N,N-dinonylamine, N,N-didecylamine, N,N-diundecylamine, N,N-didodecylamine, and N-propyl-N-butylamine; secondary amines having a branched alkyl group, such as N,N-diisohexylamine and N,N-di(2-ethylhexyl)amine; tertiary amines having a linear alkyl group, such as tributylamine and trihexylamine; and tertiary amines having a branched alkyl group, such as triisohexylamine and tri(2-ethylhexyl)amine.

Among the monoamines (1), an amine (particularly, a primary amine) having 6 or more carbons in total and having a linear alkyl group is preferred from the viewpoint that, when an amino group is adsorbed on the surface of a metal nanoparticle, a gap between the metal nanoparticle and another metal nanoparticle can be further secured and thus the effect of preventing aggregation of the metal nanoparticles is improved. The upper limit of the total number of carbons in the monoamine (1) is preferably approximately 18, more preferably 16, and particularly preferably 12, in view of availability and ease of removal during sintering. In particular, the monoamine (1) is preferably hexylamine, heptylamine, octylamine, nonylamine, decylamine, undecylamine, dodecylamine, or the like.

When an amine (particularly, a primary amine) having a branched alkyl group among the monoamines (1) is used, high dispersibility can be imparted to the metal nanoparticles with a smaller amount due to the steric factor of the branched alkyl group, as compared with the case of using an amine having the same total number of carbons and having a linear alkyl group. Therefore, the amine can be efficiently removed during sintering, particularly during low-temperature sintering, and a sintered body having more excellent electrical conductivity can be obtained. **In** this respect, the amine having a branched alkyl group is preferred.

The amine having a branched alkyl group is particularly preferably an amine having from 6 to 16 (preferably from 6 to 10) carbons in total and having a branched alkyl group, such as isohexylamine or 2-ethylhexylamine, and, from the viewpoint of steric factors, an amine having a branched alkyl group which is branched at the second carbon atom from the nitrogen atom, such as 2-ethylhexylamine, is particularly effective.

Among them, the monoamine (1) preferably includes an aliphatic hydrocarbon monoamine containing an aliphatic hydrocarbon group and one amino group, the aliphatic hydrocarbon group having 6 or more carbons in total.

The monoamine (2) has a shorter hydrocarbon chain than the monoamine (1), and thus the function of the monoamine (2) itself to impart high dispersibility to the silver nanoparticles is considered to be low. However, the monoamine (2) has a high coordination ability to a metal atom due to its higher polarity than that of the monoamine (1), and thus is considered to have an effect of promoting complex formation. In addition, the monoamine (2) has a short hydrocarbon chain and thus can be removed from the metal nanoparticle surfaces within a short time (e.g., 30 minutes or shorter, preferably 20 minutes or shorter) even in low-temperature sintering, thus providing a sintered body with excellent conductivity.

Examples of the monoamine (2) include primary amines having a linear or branched alkyl group and having from 2 to 5 carbons in total, such as ethylamine, n-propylamine, isopropylamine, n-butylamine, isobutylamine, sec-butylamine, tert-butylamine, pentylamine, isopentylamine, and tert-pentylamine; and secondary amines having a linear or branched alkyl group and having from 2 to 5 carbons in total, such as N-methyl-N-propylamine, N-ethyl-N-propylamine, N,N-dimethylamine, and N,N-diethylamine.

Among them, the monoamine (2) is preferably a primary amine having a linear or branched alkyl group and having from 2 to 5 carbons in total (preferably from 4 to 5 carbons in total), such as n-butylamine, isobutylamine, sec-butylamine, tert-butylamine, pentylamine, isopentylamine, or tert-pentylamine, and particularly preferably a primary amine having a linear alkyl group and having from 2 to 5 carbons in total (preferably from 4 to 5 carbons in total), such as n-butylamine.

Among them, the monoamine (2) is preferably an aliphatic hydrocarbon monoamine (2) containing an aliphatic hydrocarbon group and one amino group, the aliphatic hydrocarbon group having 5 or less carbons in total.

The diamine (3) has 8 or less (e.g., from 1 to 8) carbons in total and has a high coordination ability to a metal atom due to its higher polarity than the monoamine (1), and thus is considered to have an effect of promoting complex formation. In addition, the diamine (3) has an effect of promoting thermal decomposition of the complex at a lower temperature and in a short time in the thermal decomposition of the complex, and the use of the diamine (3) enables more efficient production of the metal nanoparticles. Furthermore, the surface-modified metal nanoparticles having a structure in which the metal nanoparticles are coated with the protective agent containing the diamine (3) exhibit excellent dispersion stability in a dispersion medium containing a highly polar solvent. Moreover, the diamine (3) has a short hydrocarbon chain and thus can be removed from the metal nanoparticle surfaces within a short time (e.g., 30 minutes or shorter, preferably 20 minutes or shorter) even in low-temperature sintering, thus providing a sintered body with excellent electrical conductivity.

Examples of the diamine (3) include diamines of Formula (a-2) wherein $R^4$ to $R^7$ are a hydrogen atom, and $R^8$ is a linear or branched alkylene group, such as ethylenediamine, 1,3-propanediamine, 2,2-dimethyl-1,3-propanediamine, 1,4-butanediamine, 1,5-pentanediamine, 1,6-hexanediamine, 1,7-heptanediamine, 1,8-octanediamine, and 1,5-diamino-2-methylpentane; diamines of Formula (a-2) wherein $R^4$ and $R^6$ are the same or different and a linear or branched alkyl group, $R^5$ and $R^7$ are a hydrogen atom, and $R^8$ is a linear or branched alkylene group, such as N,N'-dimethylethylenediamine, N,N'-diethylethylenediamine, N,N'-dimethyl-1,3-propanediamine, N,N'-diethyl-1,3-propanediamine, N,N'-dimethyl-1,4-butanediamine, N,N'-diethyl-1,4-butanediamine, and N,N'-dimethyl-1,6-hexanediamine; and diamines of Formula (a-2) wherein $R^4$ and $R^5$ are the same or different and a linear or branched alkyl group, $R^6$ and $R^7$ are a hydrogen atom, and $R^8$ is a linear or branched alkylene group, such as N,N-dimethylethylenediamine, N,N-diethylethylenediamine, N,N-dimethyl-1,3-propanediamine, N,N-diethyl-1,3-propanediamine, N,N-dimethyl-1,4-butanediamine, N,N-diethyl-1,4-butanediamine, and N,N-dimethyl-1,6-hexanediamine.

Among them, preferred are diamines of Formula (a-2) wherein $R^4$ and $R^5$ are the same or different and a linear or branched alkyl group, $R^6$ and $R^7$ are a hydrogen atom, and $R^8$ is a linear or branched alkylene group [in particular, diamines of Formula (a-2) wherein $R^4$ and $R^5$ are a linear alkyl group, $R^6$ and $R^7$ are a hydrogen atom, and $R^8$ is a linear alkylene group].

In diamines of Formula (a-2) wherein $R^4$ and $R^5$ are the same or different and are a linear or branched alkyl group, and $R^6$ and $R^7$ are a hydrogen atom, that is, diamines having a primary amino group and a tertiary amino group, the primary amino group has a high coordination ability to a metal atom, but the tertiary amino group has a poor coordination ability to a metal atom, and thus this prevents the resulting complex from being excessively complicated, thereby allowing the complex to be thermally decomposed at a lower temperature and in a shorter time in the thermal decomposition step of the complex. Among them, diamines having 6 or less (e.g., from 1 to 6) carbons in total are preferred, and diamines having 5 or less (e.g., from 1 to 5) carbons in total are more preferred from the viewpoint that they can be removed from the metal nanoparticle surfaces within a short time in low-temperature sintering.

Among them, the diamine (3) is preferably an aliphatic hydrocarbon diamine (3) containing an aliphatic hydrocarbon group and two amino groups, the aliphatic hydrocarbon group having 8 or less carbons in total.

In the amine containing the monoamine (1) in combination with the monoamine (2) and/or the diamine (3), the proportions of these amines used are not particularly limited, and are preferably in the range described below based on the total amount of the amines [monoamine (1) + monoamine (2) + diamine (3); 100 mol%].

Content of monoamine (1): for example, from 5 to 65 mol% (The lower limit is preferably 10 mol%, and more preferably 15 mol%. The upper limit is preferably 50 mol%, more preferably 40 mol%, and even more preferably 35 mol%.)

Total content of monoamine (2) and diamine (3): for example, from 35 to 95 mol% (The lower limit is preferably 50 mol%, more preferably 60 mol%, and even more preferably 65 mol%. The upper limit is preferably 90 mol%, and more preferably 85 mol%.)

Furthermore, when the monoamine (2) and the diamine (3) are used together, the content of each of the monoamine (2) and the diamine (3) is preferably in the range described below based on the total amount of the amines [monoamine (1) + monoamine (2) + diamine (3); 100 mol%].

Monoamine (2): for example, from 5 to 70 mol% (The lower limit is preferably 10 mol%, and more preferably 15 mol%. The upper limit is preferably 65 mol%, and more preferably 60 mol%.)

Diamine (3): for example, from 5 to 50 mol% (The lower limit is preferably 10 mol%. The upper limit is preferably 45 mol%, and more preferably 40 mol%.)

When the content of the monoamine (1) is equal to or more than the lower limit described above, the dispersion stability of the metal nanoparticles is excellent; and, when the content is equal to or less than the upper limit described above, the amine tends to be easily removed by low-temperature sintering.

When the content of the monoamine (2) is within the above range, the effect of promoting complex formation is easily obtained. In addition, sintering can be performed at a low temperature for a short time, and, further, the diamine (3) is easily removed from the surfaces of the metal nanoparticles during sintering.

When the content of the diamine (3) is within the above range, the effect of promoting complex formation and the

effect of promoting thermal decomposition of the complex are easily obtained. Also, the surface-modified metal nanoparticles having a structure in which the metal nanoparticles are coated with the protective agent containing the diamine (3) exhibit excellent dispersion stability in a dispersion medium containing a highly polar solvent.

When the monoamine (2) and/or the diamine (3) having high coordination ability to metal atoms is used in the ink composition, the amount of the monoamine (1) used can be reduced in accordance with the proportion of the monoamine (2) and/or the diamine (3) used, and, in the case of sintering at a low temperature for a short time, these amines are easily removed from the surfaces of the metal nanoparticles, and the sintering of the metal nanoparticles can be allowed to proceed sufficiently.

The amine used as the organic protective agent may contain an additional amine besides the monoamine (1), the monoamine (2), and the diamine (3). The proportion of the total content of the monoamine (1), the monoamine (2), and the diamine (3) in all the amines contained in the organic protective agent is, for example, preferably 60 mass% or more (e.g., from 60 to 100 mass%), more preferably 80 mass% or more, and even more preferably 90 mass% or more. That is, the content of the additional amine is preferably 40 mass% or less, more preferably 20 mass% or less, and even more preferably 10 mass% or less.

The amount of the amine [in particular, monoamine (1) + monoamine (2) + diamine (3)] used is not particularly limited, and is preferably approximately from 1 to 50 mol relative to 1 mol of metal atoms in a metal compound as a raw material for the metal nanoparticles. From the viewpoint that the surface-modified metal nanoparticles can be produced substantially in the absence of a solvent, the amount of the amine used is preferably from 2 to 50 mol, and particularly preferably from 6 to 50 mol. When the amount of the amine used is equal to or more than the above-described lower limit, the metallic silver compound that is not converted into a complex is less likely to remain in the complex formation step, and, in the subsequent thermal decomposition step, the uniformity of the metal nanoparticles is increased, thereby making it possible to suppress enlargement of the particles and remaining of the metal compound that is not thermally decomposed.

The organic protective agent may contain an additional organic protective agent besides the amine. Examples of the additional organic protective agent include an aliphatic monocarboxylic acid. The use of an aliphatic monocarboxylic acid tends to further improve the dispersibility of the metal nanoparticles (A).

Examples of the aliphatic monocarboxylic acid include saturated aliphatic monocarboxylic acids having 4 or more carbons, such as butanoic acid, pentanoic acid, hexanoic acid, heptanoic acid, octanoic acid, nonanoic acid, decanoic acid, undecanoic acid, dodecanoic acid, tridecanoic acid, tetradecanoic acid, pentadecanoic acid, hexadecanoic acid, heptadecanoic acid, octadecanoic acid, nonadecanoic acid, and icosanoic acid; and unsaturated aliphatic monocarboxylic acids having 8 or more carbons, such as oleic acid, elaidic acid, linoleic acid, palmitoleic acid, and eicosenoic acid.

Among them, a saturated or unsaturated aliphatic monocarboxylic acid having from 8 to 18 carbons (in particular, octanoic acid, oleic acid, or the like) is preferred. When the carboxy group of the aliphatic monocarboxylic acid is adsorbed on the surface of a metal nanoparticle, the saturated or unsaturated aliphatic hydrocarbon chain having from 8 to 18 carbons causes a steric hindrance and thus can provide a space between the metal nanoparticle and another metal nanoparticle, thus improving the effect of preventing aggregation of the metal nanoparticles. **In** addition, the aliphatic monocarboxylic acid is preferred because it is easily available and easily removed during sintering.

The amount of the aliphatic monocarboxylic acid used is, for example, approximately from 0.05 to 10 mol, preferably from 0.1 to 5 mol, and more preferably from 0.5 to 2 mol, relative to 1 mol of metal atoms in the metal compound. When the amount of the aliphatic monocarboxylic acid used is equal to or more than the above-described lower limit, the effect of improving stability is more easily obtained. When the amount of the aliphatic monocarboxylic acid used is equal to or less than the above-described upper limit, the effect of the aliphatic monocarboxylic acid is sufficiently obtained while excess aliphatic monocarboxylic acid is unlikely to remain.

The metal nanoparticles having surfaces coated with an organic protective agent containing an amine can be produced by a known or commonly used method. For example, the metal nanoparticles can be produced through a step of mixing a metal compound with an organic protective agent containing an amine to produce a complex containing the metal compound and the amine (complex production step); a step of thermally decomposing the complex (thermal decomposition step); and, as necessary, a step of washing the reaction product (washing step).

The content of the metal nanoparticles contained in the ink composition according to an embodiment of the present disclosure is preferably 8 mass% or more, more preferably 10 mass% or more, and even more preferably 12 mass% or more in the metal particles. When the content is 8 mass% or more, a sintered body having a denser structure is easily formed. The content is preferably 40 mass% or less, more preferably 30 mass% or less, and even more preferably 20 mass% or less. When the content is 40 mass% or less, the contents of the metal sub-microparticles and the metal microparticles become sufficient, and strong necking between the metal particles is easily formed.

The contents of the metal particles having specific particle sizes (metal nanoparticles, metal sub-microparticles, and metal microparticles) in the metal particles may be calculated, for example, as proportions of the metal particles having the specific particle sizes in the particle size distribution of the entire metal particles, or may be calculated by weighted averaging the contents of groups of particles having the corresponding particle sizes and contained in the respective metal

particles, before mixing, mainly containing the metal particles having the specific particle sizes based on each blending amount. The particle size distribution is not particularly limited, and can be measured, for example, by analyzing an SEM observation image or using a laser diffraction/scattering particle size distribution measuring apparatus.

Whether or not the metal particles in the ink composition according to an embodiment of the present disclosure have a peak in a specific particle size range may be confirmed by the particle size distribution measured, for example, by analyzing an SEM observation image or using a laser diffraction/scattering particle size distribution measuring apparatus, or may be determined by comparing a value (1) [obtained by multiplying the blending amount associated with the metal particles mainly containing the metal particles having the specific particle size and a relative particle amount (difference value) of the mode size (most frequent size) thereof in the particle size distribution before mixing] with a value (2) [obtained by multiplying the blending amount and the relative particle amount (difference value) of the corresponding particle size in the particle size distribution before mixing, for metal particles mainly containing metal particles having another specific particle size]. That is, when the value (1) is larger than the value (2), it can be determined that the metal particles after mixing have a peak in the specific particle size range.

(Metal Sub-microparticles)

The metal sub-microparticles may be surface-modified metal particles having a structure in which the surfaces of the metal particles are coated with an organic protective agent. The surface-modified metal particles have excellent dispersibility in an organic solvent because the spacing between the metal particles is ensured and thus aggregation is suppressed. Only one type of the metal sub-microparticles may be used, or two or more types thereof may be used.

The metal sub-microparticles have a particle size of from 101 to 1000 nm in the particle size distribution of the metal particles. The particle size of each metal sub-microparticle is a size excluding the protective agent covering the particle surface (i.e., the size of the metal sub-microparticle itself).

The metal sub-microparticles preferably have at least one peak in the range of from 101 to 1000 nm. The number of the peaks is more preferably one.

The particle size of the metal particles before mixing mainly containing the metal sub-microparticles can be calculated as a particle size distribution using, for example, a laser diffraction/scattering particle size distribution measuring apparatus (trade name "MT3000II", available from MicrotracBEL Corp.).

The peak particle size of the metal particles mainly containing the metal sub-microparticles in the particle size distribution can be obtained as a mode size.

The organic protective agent is not particularly limited, and examples thereof include known or commonly used organic protective agents used as a protective agent (stabilizer) for metal particles. Examples of the organic protective agent include organic protective agents having a functional group such as a carboxy group, a hydroxy group, a carbonyl group, an amide group, an ether group, an amino group, a sulfo group, a sulfonyl group, a sulfinate group, a sulfenate group, a mercapto group, a phosphate group, or a phosphite group. Only one type of the organic protective agent may be used, or two or more types thereof may be used.

The metal and structure of the metal sub-microparticles may be the same as the metal and structure of the metal nanoparticles described above. The metal sub-microparticles preferably have a structure in which the surfaces of the particles are formed of the metal, and may have a structure in which the particles themselves are formed of the metal, or may have a structure of metal-coated particles in which the surfaces of the particles are formed of the metal.

Examples of the shape of the metal sub-microparticles include a substantially spherical shape, a flaky shape, and an irregular shape. Among them, a substantially spherical shape is preferred from the viewpoint that strong necking between the metal particles is easily formed. Only one type of the shape of the metal sub-microparticles may be used, or two or more types thereof may be used.

The content of the metal sub-microparticles contained in the ink composition according to an embodiment of the present disclosure is preferably more than 35 mass%, more preferably 45 mass% or more, even more preferably 50 mass% or more, and particularly preferably 55 mass% or more in the metal particles. When the content is more than 35 mass%, strong necking between the metal particles is easily formed. The content is preferably 80 mass% or less, more preferably 70 mass% or less, and even more preferably 65 mass% or less. When the content is 80 mass% or less, the metal particles are densely packed, and a sintered body having a structure with a stronger binding strength is easily formed.

(Metal Microparticles)

The metal microparticles may be surface-modified metal particles having a structure in which the surfaces of the metal particles are coated with an organic protective agent. The surface-modified metal particles have excellent dispersibility in an organic solvent because the spacing between the metal particles is ensured and thus aggregation is suppressed. Only one type of the metal microparticles may be used, or two or more types thereof may be used.

The metal microparticles have a particle size of from 1001 to 10000 nm in the particle size distribution of the metal

particles. The particle size of each metal microparticle is a size excluding the protective agent covering the particle surface (i.e., the size of the metal microparticle itself).

The metal microparticles preferably have at least one peak in the range of from 1001 to 10000 nm. The number of the peaks is more preferably one.

The particle size of the metal particles before mixing mainly containing the metal microparticles can be calculated as a particle size distribution using, for example, a laser diffraction/scattering particle size distribution measuring apparatus (trade name "MT3000II", available from MicrotracBEL Corp.).

The peak particle size of the metal particles mainly containing the metal microparticles in the particle size distribution can be obtained as a mode size.

The organic protective agent is not particularly limited, and examples thereof include known or commonly used organic protective agents used as a protective agent (stabilizer) for metal particles. Examples of the organic protective agent include organic protective agents having a functional group such as a carboxy group, a hydroxy group, a carbonyl group, an amide group, an ether group, an amino group, a sulfo group, a sulfonyl group, a sulfinate group, a sulfenate group, a mercapto group, a phosphate group, or a phosphite group. Only one type of the organic protective agent may be used, or two or more types thereof may be used.

The metal and structure of the metal microparticles may be the same as the metal and structure of the metal nanoparticles described above. The metal microparticles preferably have a structure in which the surfaces of the particles are formed of the metal, and may have a structure in which the particles themselves are formed of the metal, or may have a structure of metal-coated particles in which the surfaces of the particles are formed of the metal.

Examples of the shape of the metal microparticles include a substantially spherical shape, a flaky shape, and an irregular shape. Among them, a substantially spherical shape or a flaky shape is preferred, and a flaky shape is more preferred, from the viewpoint that strong necking between the metal particles is more easily formed. Only one type of the shape of the metal microparticles may be used, or two or more types thereof may be used.

The content of the metal microparticles contained in the ink composition according to an embodiment of the present disclosure is preferably from 5 to 35 mass%, more preferably from 15 to 32 mass%, and even more preferably from 20 to 29 mass% in the metal particles. When the content is 5 mass% or more, strong necking between the metal particles is easily formed. When the content is 35 mass% or less, the metal particles are densely packed, and a sintered body having a structure with a stronger binding strength is easily formed.

The metal nanoparticles, the metal sub-microparticles and the metal microparticles may be formed of the same metal or different metals, and may be formed of the metal nanoparticles. That is, the surfaces of the metal nanoparticles, the metal sub-microparticles, and the metal microparticles may be the same or different, and may be formed of at least one selected from gold, silver, copper, nickel, aluminum, rhodium, cobalt, ruthenium, platinum, palladium, chromium, indium, and an alloy thereof, preferably at least one selected from silver, copper, and an alloy thereof.

The total content of the metal nanoparticles, the metal sub-microparticles, and the metal microparticles contained in the ink composition is preferably 80 mass% or more, more preferably 90 mass% or more, even more preferably 95 mass% or more, and particularly preferably 100 mass% in the metal particles.

The mass ratio of the metal microparticles to the metal sub-microparticles (micro/sub-micro) is preferably less than 1.00, more preferably 0.75 or less, and even more preferably 0.55 or less, from the viewpoint that strong necking between the metal particles is easily formed. The mass ratio (micro/sub-micro) is preferably 0.10 or more, more preferably 0.20 or more, and even more preferably 0.30 or more, from the viewpoint that the joint strength of the sintered body is easily increased.

The mass ratio of the metal microparticles to the metal nanoparticles (micro/nano) is preferably 3.00 or less, more preferably 2.50 or less, and even more preferably 2.00 or less, from the viewpoint that a sintered body having a structure with a strong binding strength is easily formed. The mass ratio (micro/nano) is preferably 0.50 or more, more preferably 1.00 or more, and even more preferably 1.50 or more, from the viewpoint that the joint strength of the sintered body is easily increased.

The mass ratio of the metal sub-microparticles to the metal nanoparticles (sub-micro/nano) is preferably 7.00 or less, more preferably 6.00 or less, and even more preferably 5.00 or less, from the viewpoint that a sintered body having a structure with a strong binding strength is easily formed. The mass ratio (sub-micro/nano) is preferably 2.50 or more, more preferably 3.00 or more, and even more preferably 3.50 or more, from the viewpoint that the joint strength of the sintered body is easily increased.

(Solvent)

Examples of the solvent used in an embodiment according to the present disclosure include, but are not particularly limited to, a glycol ether, a glycol ester, and a terpene. Among them, a glycol ether and a glycol ester are preferred.

Examples of the glycol ether and the glycol ester include a (poly)alkylene glycol dialkyl ether, a (poly)alkylene

glycol monoalkyl ether monoester, a (poly)alkylene glycol diester, a (poly)alkylene glycol monoalkyl ether, and a (poly) alkylene glycol monoester.

The (poly)alkylene glycol dialkyl ether, the (poly)alkylene glycol monoalkyl ether monoester, and the (poly) alkylene glycol diester are represented by the following Formula (I).

[Chem. 2]

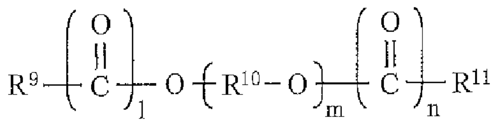

(I)

In Formula (I), $R^9$ and $R^{11}$ are the same or different and represent an alkyl group; $R^{10}$ represents an alkylene group; l and n are the same or different and represent 0 or 1; and m represents an integer of from 1 to 8.

The alkyl group of the above $R^9$ and $R^{11}$ is preferably a linear or branched alkyl group having from 1 to 10 carbons and more preferably from 1 to 5 carbons. Specific examples of the alkyl group include a methyl group, an ethyl group, a propyl group, an isopropyl group, an n-butyl group, an isobutyl group, a tert-butyl group, a pentamethyl group, a hexamethyl group, a heptyl group, an octyl group, a nonyl group, and a decyl group.

The alkylene group of the above $R^{10}$ is preferably a linear or branched alkylene group having from 1 to 6 carbons, more preferably from 1 to 4 carbons, and even more preferably from 2 to 3 carbons. Specific examples of the alkylene group include a methylene group, a methylmethylene group, an ethylene group, a dimethylmethylene group, a trimethylene group, a propylene group, a tetramethylene group, a 1-methylpropylene group, a dimethylethylene group, a pentamethylene group, and a hexamethylene group.

The above m is an integer of preferably from 1 to 8, more preferably from 1 to 3, and even more preferably from 2 to 3.

Specific examples of the (poly)alkylene glycol dialkyl ether can include propylene glycol methyl-n-propyl ether, propylene glycol methyl-n-butyl ether, diethylene glycol dimethyl ether, diethylene glycol diethyl ether, diethylene glycol dibutyl ether (dibutyl carbitol), dipropylene glycol dimethyl ether, dipropylene glycol methyl-n-propyl ether, and dipropylene glycol methyl-n-butyl ether. Only one type of them may be used, or two or more types thereof may be used.

Specific examples of the (poly)alkylene glycol monoalkyl ether monoester can include ethylene glycol methyl ether acetate, ethylene glycol-n-butyl ether acetate, propylene glycol methyl ether acetate, and dipropylene glycol methyl ether acetate. Only one type of them may be used, or two or more types thereof may be used.

Specific examples of the (poly)alkylene glycol diester include propylene glycol diacetate, 1,3-butylene glycol diacetate, 1,4-butanediol diacetate, 1,6-hexanediol diacetate, ethylene glycol dipropionate, ethylene glycol dibutyrate, and ethylene glycol dihexylate. Only one type of them may be used, or two or more types thereof may be used.

The (poly)alkylene glycol monoalkyl ether and the (poly)alkylene glycol monoester are represented by the following Formula (II).

[Chem. 3]

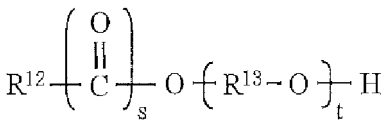

(II)

In Formula (II), $R^{12}$ represents an alkyl group; $R^{13}$ represents an alkylene group; s represents 0 or 1; and t represents an integer of from 1 to 8.

Examples of the alkyl group represented by the above $R^{12}$ include the same alkyl groups as those represented by the above $R^9$ and $R^{11}$.

Examples of the alkylene group represented by the above $R^{13}$ include the same alkylene groups as those represented by the above $R^{10}$.

The above t is preferably from 1 to 8, more preferably from 1 to 3, and even more preferably from 2 to 3.

Specific examples of the (poly)alkylene glycol monoalkyl ether include ethylene glycol monomethyl ether, ethylene glycol monophenyl ether, diethylene glycol monobutyl ether (butyl carbitol), diethylene glycol monoisobutyl ether, diethylene glycol monohexyl ether (hexyl carbitol), triethylene glycol monomethyl ether, propylene glycol monobutyl ether, dipropylene glycol monomethyl ether, and tripropylene glycol monomethyl ether. Only one type of them may be used, or two or more types thereof may be used.

Specific examples of the (poly)alkylene glycol monoester include ethylene glycol monoacetate, ethylene glycol

monopropionate, ethylene glycol monobutyrate, ethylene glycol monoisobutyrate, ethylene glycol mono-t-butyrate, and ethylene glycol monohexylate. Only one type of them may be used, or two or more types thereof may be used.

Specific examples of the terpene include 2-(4-acetoxy-4-methylcyclohexan-1-yl)propan-2-yl=acetate, 4-(acetyloxy)-α,α,4-trimethylcyclohexanemethanol, 2-(4-hydroxy-4-methylcyclohexan-1-yl)propan-2-yl=acetate, 1,2,5,6-tetrahydrobenzyl acetate, 3-acetyloxy-p-menthane, 8-acetyloxy-p-menthane, dihydroterpinyl acetate, 8-acetyloxy-p-menthane-1,2-diol, α-terpineol, β-terpineol, γ-terpineol, δ-terpineol, 1-hydroxy-p-menthane, 8-hydroxy-p-menthane, borneol, p-mentha-6,8-dien-2-ol, 1-carbonoxide, citronellol, p-cymen-8-ol, d-dihydrocarveol, eugenol, d-limonen-10-ol, 1,8-p-menthadien-4-ol, d-2,8-p-menthadien-1-ol, d-1,(7),8-menthadien-2-ol, 6,6-dimethylbicyclo[3.1.1]hept-2-ene-2-methanol, 1-perillyl alcohol, pinocarveol, sobrerol, tetrahydromyrcenol, verbenol, 2-isopropyl-5-methylcyclohexanol (menthol), and 2-[1-methyl-1-(4-methyl-3-cyclohexen-1-yl)ethoxy]ethanol. Only one type of these terpenes may be used, or two or more types thereof may be used.

The solvent used in an embodiment of the present disclosure may be a solvent containing at least an organic solvent (a), an organic solvent (b), and an organic solvent (c). The organic solvent (a), the organic solvent (b), and the organic solvent (c) are mutually different compounds and satisfy the following Relations (1) to (6). Only one type of each of the organic solvent (a), the organic solvent (b), and the organic solvent (c) may be used, or two or more types thereof may be used.

$$150°C \leq Ta \leq 250°C \ (1)$$

$$150°C \leq Tb \leq 250°C \ (2)$$

$$250°C \leq Tc \leq 350°C \ (3)$$

$$\delta a \geq 10.0 \ (4)$$

$$\delta c \leq 9.0 \ (5)$$

$$\delta c \leq \delta b \leq \delta a \ (6)$$

In the relations, Ta to Tc represent the boiling points of the organic solvents (a) to (c), respectively, and δa to δc represent the Hansen solubility parameters of the organic solvents (a) to (c), respectively. In the present specification, the Hansen solubility parameter may be referred to as "SP value" and represented by "δ".

The organic solvents (a) to (c) only need to be uniformly dissolved to form a liquid state when mixed at blending proportions used in the ink composition, and each of them may be in a liquid state or a solid state at room temperature by itself.

The organic solvent (a) satisfies at least Relation (1). That is, the boiling point Ta of the organic solvent (a) satisfies 150°C ≤ Ta ≤ 250°C, preferably 150°C < Ta < 250°C, more preferably 155°C ≤ Ta ≤ 220°C, and even more preferably 160°C ≤ Ta ≤ 200°C. When the organic solvent (a) having a boiling point within the above range is used, the dispersion medium is easily volatilized during sintering, and a sintered body can be easily formed.

The organic solvent (a) satisfies at least Relation (4) [δa ≥ 10.0]. The SP value δa of the organic solvent (a) is 10.0 or more, preferably 10.3 or more, and more preferably 10.4 or more as long as the SP value δa satisfies Relation (6). When the δa is 10.0 or more, the metal nanoparticles (A) exhibit excellent dispersibility, and separation of the metal particles from the dispersion medium can be suppressed. The δa of the organic solvent (a) is, for example, 16.0 or less, and may be 15.0 or less.

Examples of the organic solvent (a) include an alcohol solvent, a urea-based solvent, and an aprotic polar solvent. Examples of the alcohol solvent include compounds having one or more hydroxy groups. Among them, a tertiary alcohol and an ether alcohol are preferred. The alcohol solvent may have two or more hydroxy groups. The ether alcohol is a compound having an ether bond and a hydroxy group, and examples thereof include a (poly)alkylene glycol monoalkyl ether and an alkoxy group-substituted alcohol.

Specific examples of the organic solvent (a) include pinacol (δ: 10.7, boiling point: 172°C), tetramethylurea (δ: 10.6, boiling point: 177°C), 3-methoxybutanol (δ: 10.6, boiling point: 161°C), 1-methylcyclohexanol (δ: 10.4, boiling point: 155°C), and methyl carbitol (diethylene glycol monomethyl ether) (δ: 10.7, boiling point: 193°C).

The organic solvent (b) satisfies at least Relation (2). That is, the boiling point Tb of the organic solvent (b) satisfies 150°C ≤ Tb ≤ 250°C, preferably 150°C < Tb < 250°C, more preferably 180°C ≤ Tb ≤ 248°C, and even more preferably 200°C ≤ Tb ≤ 245°C. When the organic solvent (b) having a boiling point within the above range is used, the dispersion medium is easily volatilized during sintering, and a sintered body can be easily formed. When the organic solvent (b) having a boiling point of 250°C or lower is used, generation of voids during sintering can be suppressed.

The organic solvent (b) satisfies at least Relation (6). The SP value δb of the organic solvent (b) is preferably from 8.0 to 12.0, more preferably from 8.5 to 11.0, and even more preferably from 9.0 to 10.5 as long as the SP value δb satisfies Relation (6). When the δb is within the above range, there is a tendency that the compatibility between the organic solvent (a) and the organic solvent (c) is improved, separation is less likely to occur, and continuous discharge stability and storage stability are more excellent.

Examples of the organic solvent (b) include an alcohol solvent, an ester solvent, a ketone solvent, and an amine-based solvent. Examples of the alcohol solvent include solvent compounds having one or more hydroxy groups. Among them, a tertiary alcohol, an ether alcohol, and an ester alcohol are preferred. The ether alcohol is a compound having an ether bond and a hydroxy group, and examples thereof include a (poly)alkylene glycol monoalkyl ether and an alkoxy group-substituted alcohol. The ester alcohol is a compound having an ester bond and a hydroxy group, and examples thereof include (poly)alkylene glycol monoesters. Examples of the ester solvent include (poly)alkylene glycol diesters. The ketone solvent is preferably a cyclic ketone. The amine-based solvent is preferably an alkylamine.

The organic solvent (b) is selected on the premise that it satisfies Relation (6) in the relationship with the organic solvents (a) and (c). Specific examples of the organic solvent (b) that can be used include d-Camphor (camphor) (δ: 10.4, boiling point: 204°C), 1-heptanol (δ: 10.0, boiling point: 177°C), butyl carbitol (diethylene glycol monobutyl ether) (δ: 10.2, boiling point: 231°C), ethyl carbitol (diethylene glycol monoethyl ether) (δ: 10.5, boiling point: 196°C), tripropylene glycol monomethyl ether (δ: 9.4, boiling point: 243°C), α-terpineol (δ: 9.3, boiling point: 220°C), dihydroterpineol (δ: 9.0, boiling point: 210°C), 1,3-butanediol diacetate (δ: 9.2, boiling point: 232°C), propylene glycol diacetate (δ: 9.3, boiling point: 190°C), butyl carbitol acetate (δ: 9.0, boiling point: 247°C), dipropylene glycol butyl ether (δ: 9.2, boiling point: 230°C), isophorone (δ: 9.5, boiling point: 213°C), 1-decanol (δ: 9.6, boiling point: 230°C), propylene glycol monobutyl ether (δ: 9.0, boiling point: 170°C), and 1-nonanol (δ: 9.8, boiling point: 214°C).

Preferably, the boiling point Tb of the organic solvent (b) is higher than the boiling point Ta of the organic solvent (a), i.e., Tb > Ta. The temperature difference between Tb and Ta [Tb - Ta] is preferably 2°C or more, more preferably 5°C or more, and even more preferably 10°C or more. When the temperature difference is 2°C or more, generation of voids during sintering can be further suppressed.

The organic solvent (c) satisfies at least Relation (3). That is, the boiling point Tc of the organic solvent (c) satisfies 250°C ≤ Tc ≤ 350°C, preferably 250°C < Tc < 350°C, more preferably 250°C < Tc ≤ 320°C, and even more preferably 250°C < Tc ≤ 300°C. When the organic solvent (c) having a boiling point within the above range is used, rapid volatilization of the organic solvent (a) and the organic solvent (b) and generation of voids can be suppressed during sintering.

The organic solvent (c) satisfies at least Relation (5) [δc ≤ 9.0]. The SP value δc of the organic solvent (c) is 9.0 or less, preferably 8.7 or less, and more preferably 8.5 or less. When the δ is 9.0 or less, generation of voids during sintering can be suppressed. The δc of the organic solvent (c) is, for example, 6.0 or more, and may be 7.0 or more.

Examples of the organic solvent (c) include an ether solvent, an alkane solvent, and an ester solvent. Examples of the ether solvent include (poly)alkylene glycol dialkyl ethers. The alkane solvent is preferably an alkane having 14 or more carbons (for example, from 14 to 20 carbons). Examples of the ester solvent include esters of (poly)alkylene glycol alkyl ethers and fatty acids.

Specific examples of the organic solvent (c) include dibutyl carbitol (diethylene glycol dibutyl ether) (δ: 8.3, boiling point: 255°C), tetradecane (δ: 7.9, boiling point: 254°C), and hexadecane (δ: 8.0, boiling point: 287°C).

Preferably, the boiling point Tc of the organic solvent (c) is higher than the boiling point Tb of the organic solvent (b), i.e., Tc > Tb. The temperature difference between Tc and Tb [Tc - Tb] is preferably 2°C or more, more preferably 6°C or more, and even more preferably 10°C or more. When the temperature difference is 2°C or more, generation of voids during sintering can be further suppressed.

Preferably, the boiling point Tc of the organic solvent (c) is higher than the boiling point Ta of the organic solvent (a), i.e., Tc > Ta. The temperature difference between Tc and Ta [Tc - Ta] is preferably 30°C or more, more preferably 50°C or more, and even more preferably 60°C or more. When the temperature difference is 30°C or more, generation of voids during sintering can be further suppressed.

The SP value δa of the organic solvent (a), the SP value δb of the organic solvent (b), and the SP value δc of the organic solvent (c) satisfy the above Relation (6) [δc ≤ δb ≤ δa]. In particular, preferably, δb is higher than δc, i.e., δc < δb is satisfied. Also, preferably, δa is higher than δb, i.e., δb < δa is satisfied.

The difference between δb and δc [δb - δc] is preferably 0.1 or more, more preferably 0.2 or more, and even more preferably 0.5 or more. When the difference is 0.1 or more, the dispersibility of the metal particles is more excellent, and the continuous discharge stability is more excellent. The difference is preferably 2.0 or less, more preferably 1.5 or less, and even more preferably 1.3 or less. When the difference is 2.0 or less, the metal particles and the dispersion medium are less

likely to be separated, and the continuous discharge stability and the storage stability are more excellent.

The difference between δa and δb [δa - δb] is preferably 0.1 or more, more preferably 0.2 or more, and even more preferably 0.5 or more. When the difference is 0.1 or more, the dispersibility of the metal particles is more excellent, and the continuous discharge stability is more excellent. The difference is preferably 2.5 or less, more preferably 2.0 or less, and even more preferably 1.8 or less. When the difference is 2.5 or less, the metal particles and the dispersion medium are less likely to be separated, and the continuous discharge stability and the storage stability are more excellent.

The difference between δa and δc [δa - δc] based on Relations (4) and (5) is 1.0 or more, preferably 1.5 or more, and more preferably 2.0 or more. When the difference is 1.0 or more, generation of voids during sintering can be further **suppressed.** The difference is preferably 5.0 or less, more preferably 4.0 or less, and even more preferably 3.0 or less. When the difference is 5.0 or less, the metal particles and the dispersion medium are less likely to be separated, and the continuous discharge stability and the storage stability are more excellent.

The proportion of the organic solvent (a) relative to the total amount, 100 mass%, of the organic solvent (a), the organic solvent (b), and the organic solvent (c) [organic solvent (a)/{ organic solvent (a) + organic solvent (b) + organic solvent (c)}] is preferably from 5 to 70 mass%, more preferably from 10 to 60 mass%, and even more preferably from 15 to 50 mass%. When the proportion is within the above range, the dispersion medium is easily volatilized during sintering, a sintered body can be easily formed, and the dispersibility of the metal particles is more excellent.

The proportion of the organic solvent (b) relative to the total amount, 100 mass%, of the organic solvent (a), the organic solvent (b), and the organic solvent (c) [organic solvent (b)/{organic solvent (a) + organic solvent (b) + organic solvent (c)}] is preferably from 5 to 70 mass%, more preferably from 10 to 60 mass%, and even more preferably from 15 to 50 mass%. When the proportion is within the above range, the compatibility among the organic solvents is excellent, and the continuous discharge stability and the storage stability are more excellent.

The proportion of the organic solvent (c) relative to the total amount, 100 mass%, of the organic solvent (a), the organic solvent (b), and the organic solvent (c) [organic solvent (c)/{ organic solvent (a) + organic solvent (b) + organic solvent (c)}] is preferably from 5 to 70 mass%, more preferably from 10 to 60 mass%, and even more preferably from 15 to 50 mass%. When the proportion is within the above range, generation of voids during sintering can be further suppressed.

The content of the organic solvent (c) relative to 100 parts by mass of the organic solvent (a) is preferably from 20 to 400 parts by mass, more preferably from 30 to 300 parts by mass, and even more preferably from 50 to 200 parts by mass. When the content is within the above range, the blending amounts of the organic solvent (a) and the organic solvent (c) are well balanced, and void suppression during sintering and the dispersibility of the metal particles are further improved.

The content of the organic solvent (b) relative to the total amount, 100 parts by mass, of the organic solvent (a) and the organic solvent (c) is preferably from 10 to 200 parts by mass, more preferably from 20 to 150 parts by mass, and even more preferably from 40 to 100 parts by mass. When the content is within the above range, the compatibility between the organic solvent (a) and the organic solvent (c) is further improved, and the continuous discharge stability and the low-temperature storage property are more excellent.

The dispersion medium may contain an additional solvent (organic solvent) besides the organic solvent (a), the organic solvent (b), and the organic solvent (c). The total content of the organic solvent (a), the organic solvent (b) and the organic solvent (c) in the dispersion medium is preferably 50 mass% or more, more preferably 70 mass% or more, even more preferably 80 mass% or more, particularly preferably 90 mass% or more, and most preferably 95 mass% or more, relative to the total amount, 100 mass%, of the dispersion medium. When the content is 50 mass% or more, the dispersibility of the metal particles and the compatibility among the organic solvents are more excellent, and the storage stability and void formation suppression during sintering are more excellent.

When the organic solvent (a), the organic solvent (b), and the organic solvent (c) are mixed in blending proportions used in the ink composition, it is preferable that the organic solvent (a), the organic solvent (b), and the organic solvent (c) be homogeneously dissolved at ordinary temperature and do not cause phase separation. In the ink composition, it is preferable that the organic solvent (a), the organic solvent (b), and the organic solvent (c) be homogeneously dissolved at ordinary temperature and do not cause phase separation. In particular, the organic solvents preferably do not cause phase separation at from 22 to 28°C (preferably from 10 to 30°C, and more preferably from 0 to 35°C).

The total content of the metal nanoparticles, the metal sub-microparticles, and the metal microparticles in the ink composition according to an embodiment of the present disclosure is preferably from 80 to 99.5 mass%, more preferably from 85 to 99 mass%, and even more preferably from 90 to 95 mass% relative to the total amount, 100 mass%, of the ink composition. When the content is within the above range, the dispersibility of the metal particles is more excellent.

The content of the solvent in the ink composition is preferably from 0.5 to 20 mass%, more preferably from 1 to 15 mass%, and even more preferably from 5 to 10 mass% relative to the total amount, 100 mass%, of the ink composition. When the content is within the above range, the dispersibility of the metal particles is more excellent. The total content of the organic solvent (a), the organic solvent (b), and the organic solvent (c) in the ink composition is preferably within the above range.

The content of the solvent relative to 100 parts by mass of the metal particles is preferably from 0.5 to 25 parts by mass, more preferably from 1 to 18 parts by mass, and even more preferably from 5 to 11 parts by mass. When the content is within the above range, the dispersibility of the metal particles is more excellent.

The ink composition may contain an additional component besides the metal particles and the dispersion medium. The ink composition may contain, for example, an adhesive or an additive (for example, a polymer compound having a molecular weight of 10000 or more, such as an epoxy resin, a silicone resin, or an acrylic resin). The content of the adhesive or the additive is, for example, 5 mass% or less, preferably 3 mass% or less, more preferably 1 mass% or less, and particularly preferably 0.5 mass% or less relative to the total amount, 100 mass%, of the ink composition.

The ink composition according to an embodiment of the present disclosure can be used for forming, for example, a conductive circuit on a printed circuit board, an electrode of an electronic element or electronic component, or an electromagnetic wave shield (conductive film). In addition, the ink composition can be used as a joining ink composition for forming a conductive wire, a joint structure, or the like to connect electronic elements.

[Sintered Body]

A sintered body can be formed by applying the ink composition according to an embodiment of the present disclosure to a substrate by a printing method (specifically, dispenser printing, mask printing, screen printing, inkjet printing, or the like), followed by sintering. Thus, a conductive wire or a joint structure can be formed.

The sintering temperature is, for example, 150°C or higher and lower than 300°C, and preferably from 170 to 250°C. The sintering time is, for example, from 0.1 to 2 hours, and preferably from 0.5 to 1 hour.

The sintering may be performed in one of an air atmosphere, a nitrogen atmosphere, an argon atmosphere, and the like. Among them, it is preferable to perform the sintering in an air atmosphere from the viewpoint of economy and producing a conductive wire or joint structure having a lower electric resistance value.

The thickness of the ink composition applied onto the substrate is in a range such that the thickness of the conductive wire or joint structure formed by the above method is, for example, from 15 to 400 μm, preferably from 20 to 250 μm, and more preferably from 40 to 200 μm.

Examples of the substrate on which the conductive wire or the joint structure is formed include a ceramic substrate, an SiC substrate, a gallium nitride substrate, a metal substrate, a glass epoxy substrate, a BT resin substrate, a glass substrate, and a resin substrate. The shape of the conductive wire or the joint structure is not particularly limited as long as it has a shape capable of connecting electronic elements.

The sintered body (conductive wire, joint structure, or the like) formed on the substrate using the ink composition can exhibit excellent joint strength to the substrate because the metal particles are densely fused together by sintering. For example, when a silver-plated copper substrate and a silver-plated Si chip are joined to each other, the joint strength (in accordance with JIS Z3198) is preferably 40 MPa or more, more preferably 45 MPa or more, even more preferably 50 MPa or more, and particularly preferably 55 MPa or more.

When a silver-plated copper substrate and a silver-plated Si chip are joined to each other and subjected to 1000 cycles of thermal shock, each cycle including exposure to an atmosphere at -50°C for 30 minutes and then to an atmosphere at 200°C for 30 minutes, the joint strength (in accordance with JIS Z3198) is preferably 10 MPa or more, more preferably 12 MPa or more, even more preferably 15 MPa or more, and particularly preferably 20 MPa or more.

Since the ink composition has the above characteristics, for example, the ink composition can be favorably used for the purpose of producing an electronic device (for example, a power semiconductor module, or an LED module) using a printing method. The ink composition can also be used as a substitute for solder.

Each embodiment disclosed in the present specification can be combined with any other feature disclosed herein. The configurations, combinations thereof, or the like in each of the embodiments are exemplary, and additions, omissions, replacements, and other changes of the configurations may be made as appropriate without departing from the spirit of the present disclosure. In addition, each of the inventions according to the present disclosure is not limited by the embodiments or the following examples but is limited only by the claims.

Examples

An embodiment of the present disclosure will be described in detail below based on Examples.

In the case of metal nanoparticles, the particle size of the metal particles can be measured as a minimum particle size and a maximum particle size in a particle size distribution obtained by binarizing the outer shape of the particles and calculating an equivalent circle diameter from an image obtained by SEM observation. In the case of metal sub-microparticles and metal microparticles, the particle size of the metal particles can be measured using a laser diffraction/scattering particle size distribution measuring apparatus (trade name "MT3000II", available from MicrotracBEL Corp.).

The metal particles and solvent used are as follows.

- Metal particles A: surface-modified silver nanoparticles (Preparation Example 1), particle size: from 10 to 100 nm, mode size: 45 nm
- Metal particles B: trade name "S211A-10", available from Daiken Chemical Co., Ltd., silver particles having an irregular shape, particle size: from 100 to 2700 nm, mode size: 513 nm (proportion of particles having a particle size of from 101 to 1000 nm: 93 mass%)
- Metal particles C: trade name "AgC-239", available from Fukuda Metal Foil & Powder Co., Ltd., flaky silver particles, particle size: from 300 to 13000 nm, mode size: 2818 nm (proportion of particles having a particle size of from 1001 to 10000 nm: 86 mass%)

(Solvent)

- Dibutyl carbitol (diethylene glycol dibutyl ether)

Preparation Example 1 (Preparation of surface-modified silver nanoparticles)

Silver oxalate (molecular weight: 303.78) was produced from silver nitrate (available from FUJIFILM Wako Pure Chemical Corporation) and oxalic acid dihydrate (available from FUJIFILM Wako Pure Chemical Corporation). Then, 40.0 g (0.1317 mol) of the silver oxalate was charged to a 500-mL flask, and 60 g of n-butanol was added thereto, to prepare and an n-butanol slurry of silver oxalate. To the resultant slurry, a liquid amine mixture of 115.58 g (1.5802 mol) of n-butylamine (molecular weight: 73.14, reagent available from Tokyo Chemical Industry Co., Ltd.), 51.06 g (0.3950 mol) of 2-ethylhexylamine (molecular weight: 129.25, reagent available from FUJIFILM Wako Pure Chemical Corporation), and 17.02 g (0.1317 mol) of n-octylamine (molecular weight: 129.25, reagent available from Tokyo Chemical Industry Co., Ltd.) was added dropwise at 30°C. After the dropwise addition, the mixture was stirred at 30°C for 1 hour to allow a complex formation reaction between silver oxalate and the amines to proceed. After the formation of the silver oxalate-amine complex, the silver oxalate-amine complex was thermally decomposed by heating at 110°C for 1 hour to yield a dark blue suspension containing surface-modified silver nanoparticles.

The resulting suspension was cooled, and then 120 g of methanol (available from Wako Pure Chemical Industries, Ltd.) was added thereto and stirred. Then, the surface-modified silver nanoparticles were precipitated by centrifugation, and the supernatant was removed. Subsequently, 120 g of dibutyl carbitol (diethylene glycol dibutyl ether) was added and stirred. Then, the surface-modified silver nanoparticles were precipitated by centrifugation, and the supernatant was removed. Thus, wet surface-modified silver nanoparticles containing dibutyl carbitol were produced. The content of silver existing as the surface-modified silver nanoparticles in the total amount (100 mass%) of the wet surface-modified silver nanoparticles was 86.5 mass%, from measurement results by a thermal balance using "TG/DTA 6300" available from SII. Thus, the wet surface-modified silver nanoparticles contained 13.5 mass% in total of amine and dibutyl carbitol existing as the organic protective agent for surface modification.

Example 1 (Preparation of ink composition)

Metal particles B (51.00 g), metal particles C (34.00 g), and dibutyl carbitol (5.19 g) were added, and mixed with a planetary centrifugal mixer (trade name "ARE-310", available from THINKY Corporation) to prepare a liquid A. The wet metal particles A (17.34 g) produced in Preparation Example 1 (dibutyl carbitol content: 13.5 mass%, i.e., solid content: 15.00 g) were added to the liquid A (85.06 g), and mixed with a planetary centrifugal mixer (trade name "ARE-310", available from THINKY Corporation) to yield a blackish gray ink composition (containing 7.53 parts by mass of dibutyl carbitol relative to 100 parts by mass of the metal particles). The contents of the contained metal nanoparticles, metal sub-microparticles, and metal microparticles were 34 parts by mass, 51 parts by mass, and 15 parts by mass, respectively.

Examples 2 to 5 and Comparative Examples 1 to 10

Ink compositions were produced in the same manner as in Example 1 except that the blending amounts of the metal particles A, the metal particles B, and the metal particles C were changed so that the contents shown in Table 1 were attained. The numerical value of each component shown in Table 1 represents "parts by mass".

<Evaluation>

The ink compositions produced in Examples and Comparative Examples were evaluated as follows. The results are shown in Table 1.

(Joint Strength)

Each of the ink compositions produced in Examples and Comparative Examples was applied to an Ag-plated substrate (1) (an Ni-P layer (5 μm), a pure Pd layer (0.03 μm), a Pt layer (0.3 μm), and an Ag layer as the outermost layer (1 μm) were formed, by electroless plating, on a ceramic substrate obtained by joining copper plates on both sides of silicon nitride by an active metal brazing (AMB) method) by a metal mask printing method to form a coating film. Subsequently, an Si dummy chip (2) (chip size: 3 mm × 3 mm, Si thickness: 525 μm, Si dummy chip in which a Ti layer (0.2 μm) and an Ag layer (1 μm) were formed on Si by sputtering) whose joining surface was Ag-sputtered was mounted on the formed coating film at a load of 0.2 MPa. The sample in which the Si dummy chip was mounted on the substrate via the ink composition was heated at 200°C for 60 minutes in an air atmosphere using a hot plate and sintered to produce a sample (substrate (1)/sintered ink composition (sintered body)/dummy chip (2)).

The produced sample was subjected to 250 cycles, 500 cycles, or 1000 cycles of thermal shock using a thermal shock apparatus (trade name "TSE-11-A", available from ESPEC CORPORATION), each cycle including exposure to an atmosphere at - 50°C for 30 minutes and then to an atmosphere at 200°C for 30 minutes. The joint strength between the substrate (1) and the dummy chip (2) was measured using a universal bond tester (trade name "Die Shear Tester SERIES4000", available from Nordson DAGE Co., Ltd.) under room temperature conditions by a method in accordance with JIS Z3198, for the samples before and after the thermal shock cycle.

[Table 1]

Table 1

| (Parts by mass) | | Example | | | | | Comparative Example | | | | | | | | | |
|---|---|---|---|---|---|---|---|---|---|---|---|---|---|---|---|---|
| | | 1 | 2 | 3 | 4 | 5 | 1 | 2 | 3 | 4 | 5 | 6 | 7 | 8 | 9 | 10 |
| Metal particles | Metal microparticles | 34 | 25.5 | 17 | 8.5 | 27 | 51 | 59.5 | 68 | 76.5 | 63 | 66.5 | 42.5 | 45 | 47.5 | 28.5 |
| | Metal sub-microparticles | 51 | 59.5 | 68 | 76.5 | 63 | 34 | 25.5 | 17 | 8.5 | 27 | 28.5 | 42.5 | 45 | 47.5 | 66.5 |
| | Metal nanoparticles | 15 | 15 | 15 | 15 | 10 | 15 | 15 | 15 | 15 | 10 | 5 | 15 | 10 | 5 | 5 |
| Solvent | Dibutyl carbitol | 7.53 | 7.53 | 7.53 | 7.53 | 7.53 | 7.53 | 7.53 | 7.53 | 7.53 | 7.53 | 7.53 | 7.53 | 7.53 | 7.53 | 7.53 |
| Mass ratio | Micro/sub-micro | 0.67 | 0.43 | 0.25 | 0.11 | 0.43 | 1.50 | 2.33 | 4.00 | 9.00 | 2.33 | 2.33 | 1.00 | 1.00 | 1.00 | 0.43 |
| | Micro/nano | 2.27 | 1.70 | 1.13 | 0.57 | 2.70 | 3.40 | 3.97 | 4.53 | 5.10 | 6.30 | 13.30 | 2.83 | 4.50 | 9.50 | 5.70 |
| | Sub-micro/nano | 3.40 | 3.97 | 4.53 | 5.10 | 6.30 | 2.27 | 1.70 | 1.13 | 0.57 | 2.70 | 5.70 | 2.83 | 4.50 | 9.50 | 13.30 |
| Joint strength MPa | Before thermal shock | 57 | 59 | 59 | 53 | 63 | 56 | 51 | 55 | 54 | 62 | 58 | 64 | 71 | 60 | 59 |
| | Thermal shock 250 cycles | 40 | 45 | 40 | 33 | 41 | 31 | 28 | 31 | 28 | 28 | 30 | 45 | 23 | 23 | 28 |
| | Thermal shock 500 cycles | 38 | 39 | 36 | 31 | 41 | 30 | 28 | 24 | 20 | 22 | 21 | 15 | 20 | 17 | 23 |
| | Thermal shock 1000 cycles | 23 | 31 | 24 | 23 | 25 | 18 | 16 | 13 | 17 | 14 | 19 | 11 | 11 | 19 | 8 |

As shown in Table 1, the sintered bodies of the ink compositions of Examples 1 to 5 were evaluated to have excellent joint strength after thermal shock (from 23 to 31 MPa). In addition, as shown in FIGS. 1 and 2, it was found that a change in sintered body due to thermal shock was hardly observed in the SAT images of the surfaces of the sintered bodies after the measurement of the joint strength in the Examples. In contrast, it was confirmed that the sintered bodies of the ink compositions of Comparative Examples 1 to 9 in which the mass ratio of the metal microparticles to the metal sub-microparticles (micro/sub-micro) was 1 or more and Comparative Example 10 in which the content of the metal nanoparticles was less than 8 were poor in joint strength after thermal shock (from 8 to 19 MPa). In addition, as shown in FIGS. 3 to 5, it was found that a deterioration in sintered body due to thermal shock was observed in the SAT images of the surfaces of the sintered bodies after the measurement of the joint strength in the Comparative Examples.

Hereinafter, variations of the invention according to the present disclosure will be described.

[Appendix 1] An ink composition containing metal particles and a solvent, wherein

the metal particles contain metal nanoparticles having a particle size of from 1 to 100 nm, metal sub-microparticles having a particle size of from 101 to 1000 nm, and metal microparticles having a particle size of from 1001 to 10000 nm;
a mass ratio of the metal microparticles to the metal sub-microparticles (micro/sub-micro) is less than 1.00; and
a content of the metal nanoparticles in the metal particles is 8 mass% or more (preferably 10 mass% or more, and more preferably 12 mass% or more, and preferably 40 mass% or less, more preferably 30 mass% or less, and even more preferably 20 mass% or less).

[Appendix 2] The ink composition according to Appendix 1, wherein the metal nanoparticles have at least one (preferably one) peak in a range of from 1 to 100 nm.

[Appendix 3] The ink composition according to Appendix 1 or 2, wherein the metal sub-microparticles have at least one (preferably one) peak in a range of from 101 to 1000 nm.

[Appendix 4] The ink composition according to any one of Appendices 1 to 3, wherein the metal microparticles have at least one (preferably one) peak in a range of from 1001 to 10000 nm.

[Appendix 5] The ink composition according to any one of Appendices 1 to 4, wherein a content of the metal sub-microparticles in the metal particles is more than 35 mass% (preferably 45 mass% or more, more preferably 50 mass% or more, and even more preferably 55 mass% or more).

[Appendix 6] The ink composition according to any one of Appendices 1 to 5, wherein a content of the metal sub-microparticles is 80 mass% or less (preferably 70 mass% or less, and more preferably 65 mass% or less).

[Appendix 7] The ink composition according to any one of Appendices 1 to 6, wherein a content of the metal microparticles in the metal particles is from 5 to 35 mass% (preferably from 15 to 32 mass%, and more preferably from 20 to 29 mass%).

[Appendix 8] The ink composition according to any one of Appendices 1 to 7, wherein a total content of the metal nanoparticles, the metal sub-microparticles, and the metal microparticles contained in the ink composition is 80 mass% or more (preferably 90 mass% or more, more preferably 95 mass% or more, and even more preferably 100 mass%) in the metal particles.

[Appendix 9] The ink composition according to any one of Appendices 1 to 8, wherein a mass ratio of the metal microparticles to the metal sub-microparticles (micro/sub-micro) is less than 1.00 (preferably 0.75 or less, and more preferably 0.55 or less).

[Appendix 10] The ink composition according to any one of Appendices 1 to 9, wherein the mass ratio (micro/sub-micro) is 0.10 or more (preferably 0.20 or more, and more preferably 0.30 or more).

[Appendix 11] The ink composition according to any one of Appendices 1 to 10, wherein a mass ratio of the metal microparticles to the metal nanoparticles (micro/nano) is 3.00 or less (preferably 2.50 or less, and more preferably 2.00 or less).

[Appendix 12] The ink composition according to any one of Appendices 1 to 11, wherein the mass ratio (micro/nano) is 0.50 or more (preferably 1.00 or more, and more preferably 1.50 or more).

[Appendix 13] The ink composition according to any one of Appendices 1 to 12, wherein a mass ratio of the metal sub-microparticles to the metal nanoparticles (sub-micro/nano) is 7.00 or less (preferably 6.00 or less, and more preferably 5.00 or less).

[Appendix 14] The ink composition according to any one of Appendices 1 to 13, wherein the mass ratio (sub-micro/nano) is 2.50 or more (preferably 3.00 or more, and more preferably 3.50 or more).

[Appendix 15] The ink composition according to any one of Appendices 1 to 14, wherein surfaces of the metal nanoparticles, the metal sub-microparticles, and the metal microparticles are the same or different and are formed of at least one selected from silver, copper, and an alloy thereof.

[Appendix 16] The ink composition according to any one of Appendices 1 to 15, wherein the metal microparticles contain flaky particles, and the metal nanoparticles and the metal sub-microparticles contain substantially spherical particles.

[Appendix 17] The ink composition according to any one of Appendices 1 to 16, wherein the metal nanoparticles are silver nanoparticles each having a structure in which a surface is coated with a protective agent containing an amine.
[Appendix 18] The ink composition according to Appendix 17, wherein the amine contains an aliphatic hydrocarbon monoamine (1) having 6 or more carbons in total, and an aliphatic hydrocarbon monoamine (2) having 5 or less carbons in total and/or an aliphatic hydrocarbon diamine (3) having 8 or less carbons in total.
[Appendix 19] The ink composition according to any one of Appendices 1 to 18, wherein the solvent contains at least one selected from a glycol ether and a glycol ester.
[Appendix 20] The ink composition according to any one of Appendices 1 to 18, wherein the solvent is at least one selected from a (poly)alkylene glycol dialkyl ether, a (poly)alkylene glycol monoalkyl ether monoester, and a (poly)alkylene glycol diester which are represented by the following Formula (I):

[Chem. 2]

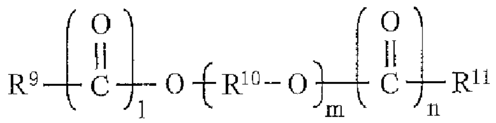

(I)

[wherein $R^9$ and $R^{11}$ are the same or different and represent an alkyl group; $R^{10}$ represents an alkylene group; l and n are the same or different and represent 0 or 1; and m represents an integer of from 1 to 8].
[Appendix 21] The ink composition according to any one of Appendices 1 to 18, wherein the solvent is at least one selected from a (poly)alkylene glycol monoalkyl ether and a (poly)alkylene glycol monoester which are represented by the following Formula (I):

[Chem. 3]

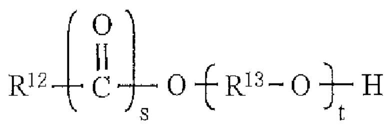

(II)

[wherein $R^{12}$ represents an alkyl group; $R^{13}$ represents an alkylene group; s represents 0 or 1; and t represents an integer of from 1 to 8].
[Appendix 22] The ink composition according to any one of Appendices 1 to 18, wherein the solvent is diethylene glycol dibutyl ether.
[Appendix 23] The ink composition according to any one of Appendices 1 to 18, wherein the solvent contains an organic solvent (a), an organic solvent (b), and an organic solvent (c) which are mutually different compounds and satisfy the following Relations (1) to (6):

$$150°C \leq Ta \leq 250°C \quad (1)$$

$$150°C \leq Tb \leq 250°C \quad (2)$$

$$250°C \leq Tc \leq 350°C \quad (3)$$

$$\delta a \geq 10.0 \quad (4)$$

$$\delta c \leq 9.0 \quad (5)$$

$$\delta c \leq \delta b \leq \delta a \quad (6)$$

[wherein Ta to Tc represent boiling points of the organic solvents (a) to (c), respectively, and δa to δc represent Hansen solubility parameters of the organic solvents (a) to (c), respectively].
[Appendix 24] The ink composition according to any one of Appendices 1 to 23, wherein a content of the solvent is

from 0.5 to 20 mass% (preferably from 1 to 15 mass%, and more preferably from 5 to 10 mass%).

[Appendix 25] The ink composition according to any one of Appendices 1 to 24, wherein a content of the solvent is from 0.5 to 20 mass% (preferably from 1 to 15 mass%, and more preferably from 5 to 10 mass%) relative to a total amount, 100 mass%, of the ink composition.

[Appendix 26] The ink composition according to any one of Appendices 1 to 25, wherein a content of the solvent is from 0.5 to 25 parts by mass (preferably from 1 to 18 parts by mass, and more preferably from 5 to 11 parts by mass) relative to 100 parts by mass of the metal particles.

[Appendix 27] The ink composition according to any one of Appendices 1 to 26, wherein a content of an additional component other than the metal particles and the dispersion medium is 5 mass% or less (preferably 3 mass% or less, more preferably 1 mass% or less, and even more preferably 0.5 mass% or less) relative to the total amount, 100 mass%, of the ink composition.

[Appendix 28] The ink composition according to any one of Appendices 1 to 27, wherein the ink composition is for joining.

[Appendix 29] A sintered body of the ink composition described in any one of Appendices 1 to 28.

[Appendix 30] The sintered body of the ink composition according to Appendix 29, wherein a joint strength (in accordance with JIS Z3198) when a silver-plated copper substrate and a silver-plated Si chip are joined is 40 MPa or more (preferably 45 MPa or more, and more preferably 50 MPa or more).

[Appendix 31] The sintered body of the ink composition according to Appendix 29 or 30, wherein, when a silver-plated copper substrate and a silver-plated Si chip are joined and subjected to 1000 cycles of thermal shock, each cycle including exposure to an atmosphere at -50°C for 30 minutes and then to an atmosphere at 200°C for 30 minutes, a joint strength (in accordance with JIS Z3198) is 10 MPa or more (preferably 12 MPa or more, more preferably 15 MPa or more, and even more preferably 20 MPa or more).

[Appendix 32] An electronic device including the sintered body described in any one of Appendices 29 to 31.

[Appendix 33] An ink composition containing metal particles and a solvent, wherein
a particle size distribution of the metal particles has at least one peak for each of a particle size range of from 1 to 100 nm, a particle size range of from 101 to 1000 nm, and a particle size range of from 1001 to 10000 nm.

## Claims

1. An ink composition comprising metal particles and a solvent, wherein

   the metal particles contain metal nanoparticles having a particle size of from 1 to 100 nm, metal sub-microparticles having a particle size of from 101 to 1000 nm, and metal microparticles having a particle size of from 1001 to 10000 nm;
   a mass ratio of the metal microparticles to the metal sub-microparticles (micro/sub-micro) is less than 1.00; and
   a content of the metal nanoparticles in the metal particles is 8 mass% or more.

2. The ink composition according to claim 1, wherein a content of the metal sub-microparticles in the metal particles is more than 35 mass%.

3. The ink composition according to claim 1 or 2, wherein a content of the metal microparticles in the metal particles is from 5 to 35 mass%.

4. The ink composition according to claim 1 or 2, wherein a mass ratio of the metal microparticles to the metal nanoparticles (micro/nano) is 3.00 or less.

5. The ink composition according to claim 1 or 2, wherein surfaces of the metal nanoparticles, the metal sub-microparticles, and the metal microparticles are the same or different and are formed of at least one selected from silver, copper, and an alloy thereof.

6. The ink composition according to claim 1 or 2, wherein the metal microparticles contain flaky particles, and the metal nanoparticles and the metal sub-microparticles contain substantially spherical particles.

7. The ink composition according to claim 1 or 2, wherein the metal nanoparticles are silver nanoparticles each having a structure in which a surface is coated with a protective agent containing an amine.

8. The ink composition according to claim 7, wherein the amine contains an aliphatic hydrocarbon monoamine (1) having

6 or more carbons in total, and an aliphatic hydrocarbon monoamine (2) having 5 or less carbons in total and/or an aliphatic hydrocarbon diamine (3) having 8 or less carbons in total.

**9.** The ink composition according to claim 1 or 2, wherein the solvent contains at least one selected from a glycol ether and a glycol ester.

**10.** The ink composition according to claim 1 or 2, wherein the solvent contains an organic solvent (a), an organic solvent (b), and an organic solvent (c) which are mutually different compounds and satisfy Relations (1) to (6) described below:

$$150°C \leq Ta \leq 250°C \ (1)$$

$$150°C \leq Tb \leq 250°C \ (2)$$

$$250°C \leq Tc \leq 350°C \ (3)$$

$$\delta a \geq 10.0 \ (4)$$

$$\delta c \leq 9.0 \ (5)$$

$$\delta c \leq \delta b \leq \delta a \ (6)$$

[wherein Ta to Tc represent boiling points of the organic solvents (a) to (c), respectively, and δa to δc represent Hansen solubility parameters of the organic solvents (a) to (c), respectively].

**11.** The ink composition according to claim 1 or 2, wherein a content of the solvent is from 0.5 to 20 mass%.

**12.** The ink composition according to claim 1 or 2, wherein the ink composition is for joining.

**13.** A sintered body of the ink composition described in claim 1 or 2.

**14.** An electronic device comprising the sintered body described in claim 13.

**15.** An ink composition comprising metal particles and a solvent, wherein
a particle size distribution of the metal particles has at least one peak for each of a particle size range of from 1 to 100 nm, a particle size range of from 101 to 1000 nm, and a particle size range of from 1001 to 10000 nm.

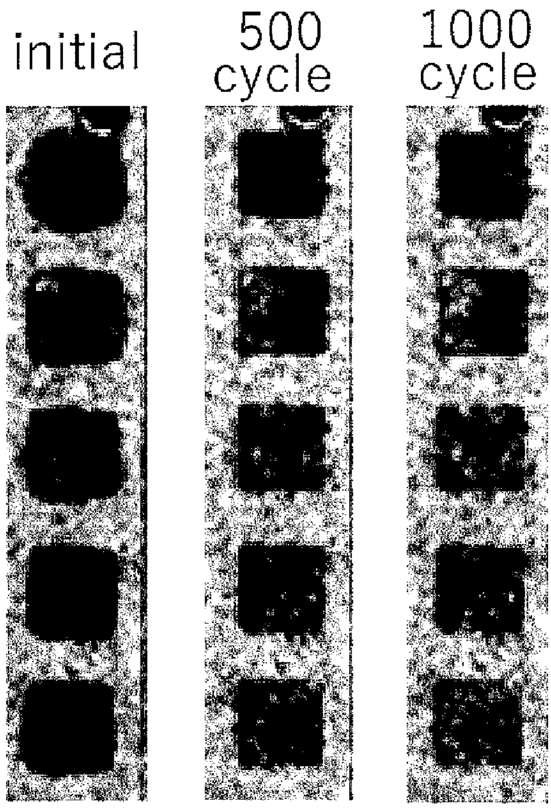


FIG. 1

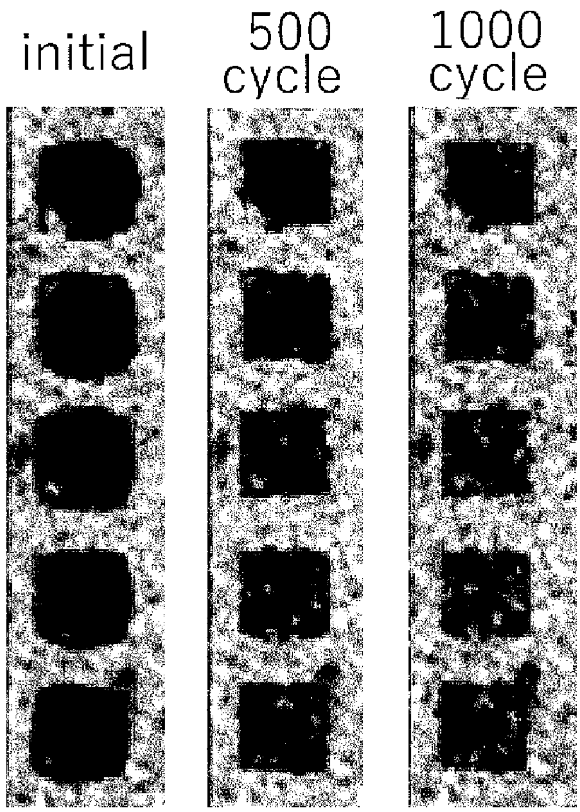


FIG. 2

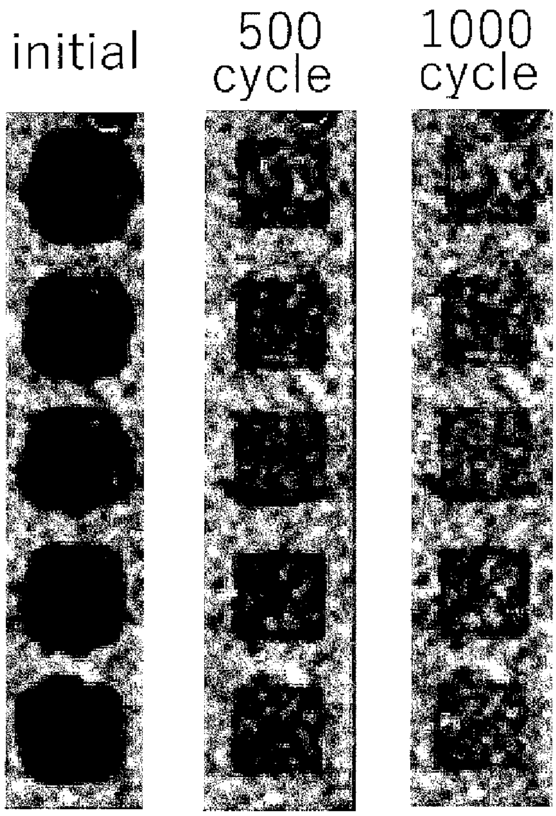


FIG. 3

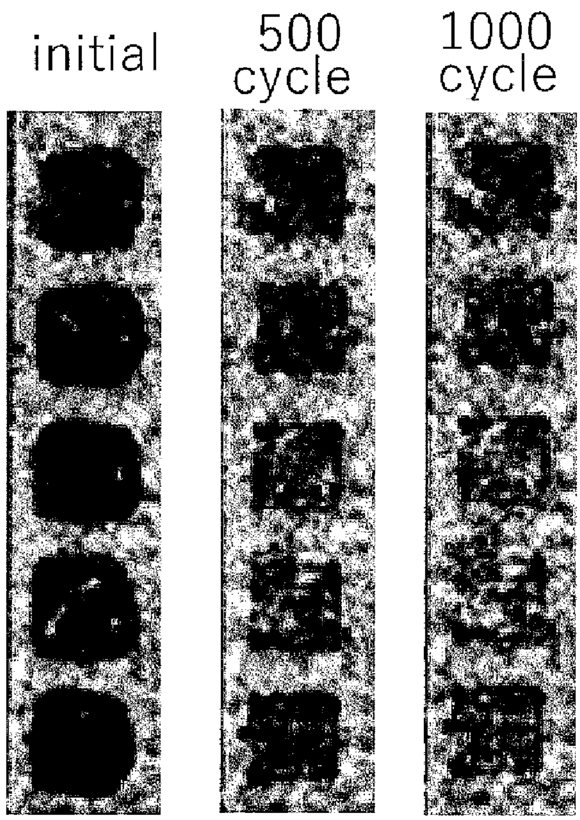


FIG. 4

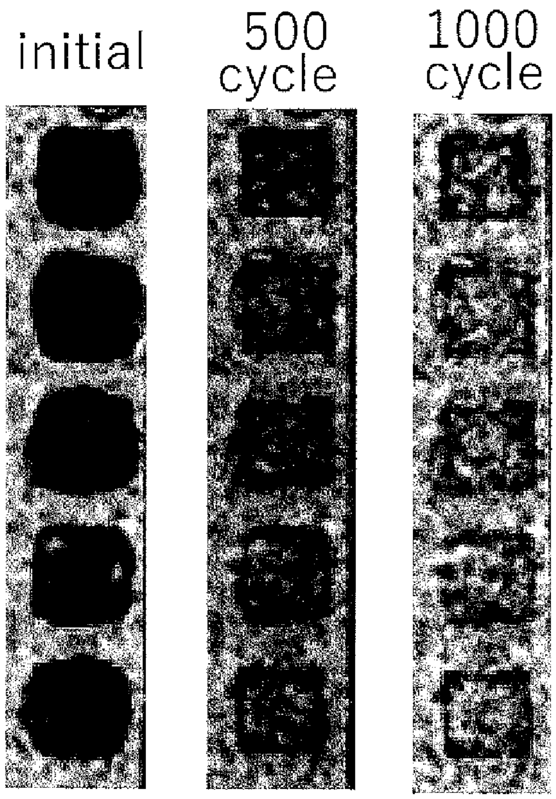


FIG. 5

**INTERNATIONAL SEARCH REPORT**

International application No.
**PCT/JP2023/023646**

**A. CLASSIFICATION OF SUBJECT MATTER**

***B22F 1/052***(2022.01)i; ***B22F 1/00***(2022.01)i; ***B22F 1/054***(2022.01)i; ***B22F 1/065***(2022.01)i; ***B22F 1/068***(2022.01)i; ***B22F 1/102***(2022.01)i; ***B22F 1/17***(2022.01)i; ***B22F 7/08***(2006.01)i; ***B22F 9/00***(2006.01)i
FI: B22F1/052; B22F1/00 K; B22F1/00 L; B22F1/054; B22F1/065; B22F1/068; B22F1/102; B22F1/17; B22F7/08 C; B22F9/00 B

According to International Patent Classification (IPC) or to both national classification and IPC

**B. FIELDS SEARCHED**

Minimum documentation searched (classification system followed by classification symbols)

B22F1/052; B22F1/00; B22F1/054; B22F1/065; B22F1/068; B22F1/102; B22F1/17; B22F7/08; B22F9/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2015-211092 A (SHIKOKU INSTRUMENTS CO., LTD.) 24 November 2015 (2015-11-24) paragraphs [0001]-[0043] | 1-6, 9-15 |
| Y | | 7-8 |
| X | JP 2021-127505 A (SHOWA DENKO MATERIALS CO., LTD.) 02 September 2021 (2021-09-02) paragraphs [0001]-[0196] | 1-6, 9-15 |
| Y | | 7-8 |
| X | JP 2010-109334 A (MITSUBISHI MATERIALS CORP.) 13 May 2010 (2010-05-13) paragraphs [0001]-[0067] | 1-6, 9-15 |
| Y | | 7-8 |
| Y | WO 2019/111795 A1 (DAICEL CORP.) 13 June 2019 (2019-06-13) claims 1-6 | 7-8 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 August 2023** | **15 August 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2023/023646**

| Patent document cited in search report | Publication date (day/month/year) | Patent family member(s) | Publication date (day/month/year) |
|---|---|---|---|
| JP 2015-211092 A | 24 November 2015 | (Family: none) | |
| JP 2021-127505 A | 02 September 2021 | (Family: none) | |
| JP 2010-109334 A | 13 May 2010 | (Family: none) | |
| WO 2019/111795 A1 | 13 June 2019 | US 2020/0385595 A1<br>claims 11-22<br>EP 3722382 A1<br>CN 111433299 A<br>KR 10-2020-0096270 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2022107150 A
- JP 2018059192 A